# EUROPÄISCHE PATENTANMELDUNG

(11) **EP 0 568 837 A2**
(43) Veröffentlichungstag der Anmeldung: **10.11.1993**
(21) Anmeldenummer: 93105885.3
(22) Anmeldetag: 08.04.1993
(51) Int. Cl.: G06K 7/08, B67D 5/08

(54) **Vermischungsschutz**

(30) Priorität: 09.04.1992 DE 4211987; 14.05.1992 DE 4215872
(71) Anmelder: ULTRAKUST electronic GmbH, D-94239 Gotteszell (DE)
(72) Erfinder: Decker, Rainer, Dr., W-8360 Deggendorf (DE)
(74) Vertreter: Weber, Otto Ernst, Dipl.-Phys.

(57) **Zusammenfassung**

Die Erfindung betrifft eine Vorrichtung zum Kennzeichnen eines in einem Feststoff- oder Flüssigkeitsbehälter befindlichen Stoffes mit einem Code-Träger, dessen Code-Signal von einer Auswertevorrichtung zur Ableitung eines Freigabe-/Sperrsignals für einen Befüllungs- oder Entleerungsvorgang des Feststoff- oder Flüssigkeitsbehälters erfaßt wird. Für eine kostengünstige und sichere Realisierung einer derartigen Vorrichtung ist der Code-Träger als Transponder ausgebildet, der über eine induktive, in dem Füllschlauch integrierte Koppel-Vorrichtung gelesen oder beschrieben werden kann.

Alternativ kann der den Tankinhalt kennzeichnende Transponder auch durch eine rechnergesteuerte, das Verhalten des Transponders emulierende Vorrichtung ersetzt werden, was neben flexibleren Nutzungsmöglichkeiten auch einen weitergehenden, bidirektionalen Datentransfer ermöglicht.

Eine weitere Ausführungsform, die keine induktive Kopplung über den Füllschlauch voraussetzt, erfordert beidseitig ähnlich ausgebildete Rechnersysteme, die jeweils über eine Lesevorrichtung für Transponder verfügen und über eine zusätzliche Datenstrecke on-line oder off-line miteinander in Verbindung stehen. Hier genügt es, jeden Verbindungsschlauch beidseitig mit Lesetranspondern zu kennzeichnen, um die Aufgabe des zuverlässigen Vermischungsschutzes zu lösen.

## Beschreibung

Die Erfindung betrifft eine Vorrichtung gemäß dem Oberbegriff des Anspruchs 1.

Derzeit werden in Tanks gelagerte Flüssigkeiten durch einen am Füllstutzen angebrachten Identifizierungscode gekennzeichnet, der aus einem oder mehreren, in bestimmten Positionen angebrachten Permanentmagneten besteht. Damit können Fehlbedienungen bei der Befüllung oder Entladung des Tanks, die das Risiko einer Vermischung verschiedener Substanzen beinhalten, auf elektronischem Wege rechtzeitig erkannt und verhindert werden. Dieses Problem stellt sich vor allem hinsichtlich der Befüllung von Tankfahrzeugen aus Treibstofftanks und vice versa.

Spätestens seit der Einführung bleifreier Kraftstoffsorten ist die Notwendigkeit einer fehlbedienungssicheren Befüllung der Kraftstofftanks enorm gestiegen. Schon die Kosten für die Behebung einer erkannten Vermischung, z. B. eines bleifreien mit einem verbleiten Kraftstoff, sind immens hoch, da der gesamte Tankinhalt abgepumpt und die Raffinerie zurücktransportiert werden muß. Bei einer unerkannten oder zu spät erkannten Vermischung sind die Folgekosten unabsehbar, da die Katalysatoranlagen von mehreren hundert Fahrzeugen durch die falsche Betankung zerstört werden.

Um somit der Gefahr einer unzulässigen Vermischung von Kraftstoffsorten zu begegnen, ist es bekannt, die Schlauchenden bzw. Steckkupplungen des Tankfahrzeuges und/oder des Kraftstofftanks mit einer Codierung in Form von Permanentmagneten zu versehen, die beim Befüllvorgang mit einem Gegenstück mechanisch verbunden werden müssen. In diesem Gegenstück ist als Zusatzvorrichtung zum Beispiel eine Anordnung von vier Reed-Kontakten vorgesehen, die von den Magneten aktiviert werden, wenn diese beim Schließen der Kupplung mechanisch in die Nähe der Kontakte kommen. Wird jeder Kraftstoffsorte ein Code zugeordnet, so kann ein Computersystem, das an die erwähnten Reed-Kontakte angeschlossen ist, die Codierungen für die Treibstoffe im Tankfahrzeug und im Kraftstofftank vergleichen und entscheiden, ob der bevorstehende Befüllvorgang zulässig oder unzulässig ist. Das Computersystem gibt somit ein Freigabe- oder Sperrsignal an die Tankvorrichtung ab, das dazu führt, daß der Füllvorgang gestartet oder nicht gestartet wird. Es ist darüber hinaus möglich, zusätzlich oder alternativ zu diesem Freigabe-/Sperrsignal ein Alarmsignal auszulösen, wenn das Computersystem bei dem Vergleich eine bevorstehende unzulässige Fehlbedienung feststellt.

Diese Einrichtungen sind jedoch mit einer Reihe von Nachteilen behaftet. So ist die absolute Anzahl der unterscheidbaren Kraftstofftypen durch die Anzahl der unterschiedlich magnetisierten Abschnitte im Permanentmagneten begrenzt. Des weiteren sind die oben genannten Zusatzeinrichtungen relativ schwer und entsprechend teuer. Es wäre weiterhin wünschenswert, durch die Codierung zusätzlich zur Identifizierung der Treibstoffart weitere Informationen, wie z.B. eine Kennung für die Abladestelle und z.B. den Zeitpunkt der letzten Befüllung, zu erhalten. Das oben genannte Codierungssystem läßt sich weiterhin nicht verwenden, wenn zwischen dem Tankwagen eine beidseitig lösbare Schlauchverbindung verwendet wird.

Da bei dem bekannten System die Erkennung der Flüssigkeitsart beim Entladen der Tanks über ein separates Kabel erfolgt, wird zudem die gewünschte Sicherheit nicht erreicht, da im praktischen Betrieb die elektrische Verbindung zu einem anderen Tank hergestellt werden kann als zu dem, mit dem der Abfüllschlauch verbunden ist.

Es ist daher **Aufgabe** der Erfindung, Vorrichtungen der eingangs genannten Art zu schaffen, die auf kostengünstige Weise einen vollautomatisierbaren Vermischungsschutz für die Befüllung und/oder Entleerung von Feststoff- oder Flüssigkeitsbehältern, insbesondere Kraftstofftanks, bereitstellen.

Bei den Vorrichtungen der eingangs genannten Art wird diese Aufgabe durch die kennzeichnenden Merkmale des Anspruchs 1 gelöst. Vorteilhafte Weiterbildungen der Erfindung sind Gegenstand der Unteransprüche.

Erfindungsgemäß wird anstelle der an den Befüllungs- und Entleerungsstellen verwendeten Codierung mit Magneten ein Transponder eingesetzt. Dies ist eine Halbleiterschaltung mit angeschlossener Antenne, z.B. einer Ferritantenne, die zunächst von einer externen Hochfrequenzquelle Energie empfängt und diese Energie in Form einer codierten Information wieder abstrahlt. Die Hochfrequenzquelle ist vorzugsweise in der Form einer Sendespule, gegebenenfalls mit Ferritkern, realisiert. Der gesendete Code kann nicht nur Informationen über den Inhalt des Tanks, sondern auch über die Bezugsquelle und das letzte Befüllungsdatum erhalten. Der Code wird von einem Empfänger ausgewertet, der normalerweise mit dem Hochfrequenzsender eine Einheit bildet.

Die Erfindung kann sowohl mit Nur-Lese-Transpondern als auch mit Schreibe-/Lese-Transpondern realisiert werden. Letztere sind jedoch aufgrund des größeren Aufwandes für die integrierte Schaltung deutlich teurer. Bei den Nur-Lese-Transpondern wird in der Regel eine fortlaufende Nummernsequenz hergestellt, wobei unterschiedlichen Transpondern unterschiedliche Nummern zugeordnet sind.

In einer kostengünstigeren Ausführungsform der Erfindung wird der Vermischungsschutz mit Nur-Lese-Transpondern realisiert. An Bord des Tankfahrzeuges befindet sich hierfür an jedem Flansch, über den jeweils eine Kammer des Tankfahrzeuges gefüllt oder geleert werden kann, eine Sende-/Lesespule. Das Tankfahrzeug verfügt über einen Bordrechner, der über einen Multiplexer in kurzen Zeitabständen nacheinander die den verschiedenen Kammern zugeordneten Spulen abfrägt. Diese Abfrage kann sehr schnell, zum Beispiel mit einer Frequenz von 10 Hz, durchgeführt werden.

Beim Betanken des Fahrzeugs wird ein in den Betankungsarm der Raffinerie oder eines Tanklagers integrierter Transponder in die Nähe eines Flansches gebracht. Der Bordrechner speichert die über die Spule erhaltenen Informationen und ordnet sie dem entsprechenden Flansch zu. Es werden preiswerte Nur-Lese-Transponder eingesetzt, die in geringen Abmessungen von z.B. 2 x 2 x 10 mm herstellbar sind. Die im Transponder gespeicherte Information kann dann mit einer Ziffernfolge codiert sein, bei der die erste Ziffer Aufschluß über die Produktart gibt und die übrigen Ziffern eine eindeutige, garantiert verwechslungsfreie Codierung für den Be-/Entladeort geben. Die letzte Ziffer wird vom Bordrechner direkt ausgewertet. Ist die zu betankende Kammer des Tankfahrzeuges leer, was an dem Signal eines am tiefsten Punkt der Kammer eingebauten Leermelders erkannt wird, so wird die erhaltene Information nur gespeichert. Der Rechner speichert also ab dem Zeitpunkt, ab dem der Leermelder eine erneute Benetzung signalisiert, welches Kraftstoffprodukt sich in der jeweiligen Kammer befindet. Ist die Kammer hingegen vor dem Befüllen nicht leer, so wird die daran befindliche Kraftstoffart mit der neu hinzuzuladenden verglichen und nur dann eine Freigabe für einen Transfer erteilt, wenn beide Kraftstoffarten identisch sind.

Alternativ oder zusätzlich dazu kann, wenn keine elektrisch ansteuerbaren Absperrorgane verfügbar sind, auch ein Alarmgeber angeschlossen werden, der einer Bedienperson unmißverständlich eine bevorstehende Fehlbedienung signalisiert.

Beim anschließenden Entladen, z.B. an einer Tankstelle, sind alle Flansche, die zu dem Bodentank der Tankstelle führen, entsprechend codiert. Die Codierung enthält hierbei eine Information über die Produktart, für die der jeweilige Tank bestimmt ist. Der am Anschlußflansch des Flüssigkeitstanks angeordnete Transponder wird zum Beispiel über Steckkontakte oder über eine induktive Ankoppelung mit dem Bordrechner des Tankfahrzeuges verbunden. Dieser erkennt somit vor der Abgabe, ob der angeschlossene Kraftstofftank der Tankstelle für die abzugebende Kraftstoffart vorgesehen ist. Falls dies nicht der Fall sein sollte, wird die Abgabe gesperrt und/oder ein Alarmgeber aktiviert.

Statt der Nur-Lese-Transponder können auch Schreib-/Lese-Transponder eingesetzt werden. Hierbei sind Codeteile vorgesehen, die zur Unterscheidung der Produktarten herangezogen werden. Andere Codesignale können zur Datenerfassung verwendet werden. Sie können z. B. Informationen über den Ort der Abladung und über den letzten Füllvorgang etc. enthalten. In vorteilhafter Weise können hier Informationen zurückgemeldet werden, beispielsweise nach Beendigung des Füllvorganges die abgegebene Menge an Bord des Tankfahrzeuges, die mittels eines an Bord des Tankfahrzeuges angeordneten Zählers gemessen wird und die Chargennummer bzw. den Bezugsort des Kraftstoffes. Da der gesamte Vorgang ohne manuelle Intervention seitens der Bedienperson erfolgt, sind die übertragenen Daten fälschungssicher und können zum Beispiel als elektronischer Empfangsbeleg verwendet werden.

Zur Verbindung des Tankfahrzeuges mit einem Kraftstofftank werden in der Regel beidseitig lösbare Schläuche verwendet. In diesem Fall besteht ein Problem in der Integrierung einer Sende-/Lesespule in den Schlauch. Bei der Verwendung eines beidseitig lösbaren Schlauchs kann nämlich jeder Flansch eines Kraftstofftanks mit jedem Flansch der Kammern des Tankfahrzeugs verbunden sein. Vorzugsweise wird hier in den Schlauch eine induktiv gekoppelte Leitung integriert, die aus je einer an jedem Schlauchende angeordneten Spule besteht, die über elektrische Leitungen miteinander verbunden sind. Die Verbindung kann vorzugsweise über die in jedem Schlauch integrierte Metallarmierung erfolgen. Bei der Abfrage des Codesignals wird der am tankfahrzeugseitigen Flansch abgestrahlte Sendeimpuls von der einen Spule des Befüllungsschlauchs empfangen und an der dem Kraftstofftank zugewandten Spule wieder abgestrahlt. Dort befindet sich der am Tankstutzen integrierte Transponder, dessen Antwort auf dem umgekehrten Wege wieder zurückgeleitet wird. Bei geeigneter Kopplung ist es technisch möglich, mehrere solcher induktiv gekoppelter Strecken hintereinander zu schalten, wie z. B. ein Reduzierstück, um Durchmesserdifferenzen zwischen Schlauch und Flansch aneinander anzupassen.

In einer weiteren vorteilhaften Ausgestaltung der Erfindung sind sowohl das Tankfahrzeug als auch der Kraftstofftank mit einer elektronischen Steuerung versehen. Dieses System zur Verhinderung einer Fehlbedienung wird beispielsweise in Tanklagern oder Tankstellen installiert, wenn diese gegen unbefugte Entnahme oder unvollständige Lieferung geschützt werden sollen. Ähnlich wie vom Bordrechner des Fahrzeugs wird von der landseitigen Vorrichtung, die natürlich alle Tanks des Lagers überwachen kann, ein Protokoll von jeder Transaktion gespeichert.

Hierbei übernimmt eine beim Kraftstofftank installierte Elektronik die gleichen Aufgaben wie der passive Transponder, d.h., auf einen entsprechenden Abfrageimpuls des Bordrechners eines Tankfahrzeugs hin, antwortet die Elektronik in gleicher Weise wie ein Transponder. Diese Lösung kann z. B. dann eingesetzt werden, wenn über den gleichen Flansch verschiedene Produkte abgegeben werden können. Die Art des z. B. an einem Wahlschalter selektierten Produkts wird an den Bordrechner des Tankfahrzeuges übermittelt, der seinerseits wieder die entsprechenden Maßnahmen wie Sperrung des Übertragungsvorganges und/oder Alarmgabe einleiten kann.

Dieses System kann auch dazu verwendet werden, bidirektional weitergehende Informationen auszutauschen. Neben der Produktart sind hier z. B. der Austausch von Identifikationsnummern, Auftragsnummern, Mengeninformationen sowie weitere Betriebsdaten denkbar. Wesentlich hierbei ist ein Aufwärtskompatibilität des Systems. Das heißt, bei einfachen Stationen, die mit Nur-Lese-Transpondern versehen sind, kann der Bordrechner des Tankfahrzeuges immer noch die auf den Vermischungsschutz reduzierten Aufgaben lösen, ohne daß eine Änderung des Systems notwendig ist.

In einer kostengünstigen Ausführungsform der Erfindung erfolgt der Datenaustausch zur Verhinderung einer Fehlbedienung mit Nur-Lese-Transpondern ohne die Verwendung einer induktiv gekoppelten Verlängerungsleitung im Verbindungsschlauch. Diese Art des Datenaustausches wird verwendet, wenn die Integration einer induktiven Koppelung in dem beidseitig lösbaren Verbindungsschlauch zur Verbindung des Tankfahrzeuges mit einem Kraftstofftank nicht möglich sein sollte, zum Beispiel weil dieser vollständig aus Metall besteht. In diesem Fall werden das Tankfahrzeug als auch der Kraftstofftank mit einer Rechnersteuerung versehen. Beide Schlauchenden des Verbindungsschlauches sind mit Nur-Lese-Transpondern ausgestattet, die beide den gleichen Code enthalten. Vor Beginn des Transfers müssen nun beide Rechnersteuerungen diesen Code lesen und einander mitteilen. Zusammen mit der Information über den jeweils auf beiden Seiten belegten Flansch gibt dies eindeutigen Aufschluß über die hergestellte Verbindung zwischen Tankfahrzeug und Kraftstofftank. Die Kommunikation beider Systeme kann wahlweise über eine On-line-Verbindung, zum Beispiel Autotelefon oder kurzreichweitiger Sender, oder Off-line, zum Beispiel über einen elektronischen Datenträger erfolgen, der vor dem Vorgang zum Beispiel auf der Seite des Tankfahrzeuges mit den Daten der hergestellten Verbindung beschrieben und danach von der Rechnersteuerung des Kraftstofftanks wiedergelesen wird. Erst nach dem Lesen wird der Transfer freigegeben, wenn keine unzulässige Vermischungsgefahr besteht. Auch hier können weitergehende Produktinformationen in beiden Richtungen weitergegben werden.

Werden Schreib-/Lese-Transponder eingesetzt, die von beiden Seiten beschrieben und gelesen werden können, so kann ggf. die Kommunikation zwischen den beiderseitigen Rechnersteuerungen entfallen. Die höheren Kosten für die Schreib-/Lese-Transponder können hier durch den Entfall der aufwendigen Kommunikationssysteme evtl. kompensiert werden. Voraussetzung hierfür ist, daß der im losen Schlauchende untergebrachte Schreib-/Lese-Transponder vor dem Herstellen der Verbindung zwischen Tankfahrzeug und Kraftstofftank mit allen relevanten Informationen beschrieben wird, die für den Befüllungsvorgang wichtig sind. So zum Beispiel, welches Produkt übergeben wird, welche Menge übergeben werden soll und welche Menge maximal aufgenommen werden kann etc.. Zum Beschreiben wird das Schlauchende zwischen den Lieferungen z. B. in eine Halterung eingehängt, in die eine Lese-/Schreibvorrichtung für Transponder integriert ist. Diese ist mit dem landseitigen Rechnersystem verbunden, das im Ruhezustand einen Code in den Transponder am Schlauchende schreibt, der jeglichen Produkttransfer blockiert. Soll ein Transfer stattfinden, wird dies manuell oder über eine Datenverbindung dem landseitigen Rechner gemeldet, der den Schreib-/Lesetransponder mit einem entsprechenden Produkt-Kennungs-Code kennzeichnet. Nach Herstellen der Schlauchverbindung kann dieser Code dann vom Bordrechner des Fahrzeuges gelesen und für Zwecke des Vermischungsschutzes ausgewertet werden. Nach Beendigung des Transfers kann der Bordrechner dann alle den Transfer betreffenden Informationen, wie Menge, Herkunft, Leerzustand des Tanks im Fahrzeug etc. beschreiben. Nach dem Lösen der Schlauchverbindung und dem Wiedereinhängen des Schlauchendes in die Halterung können diese Informationen vom landseitigen Rechner wieder gelesen und z. B. zum Druck einer Empfangs-Quittung verwendet werden.

Insgesamt schafft die Erfindung daher eine Vorrichtung zum Kennzeichnen eines in einem Feststoff- oder Flüssigkeitsbehälter befindlichen Stoffes mit einem Code-Träger, dessen Code-Signal von einer Auswertevorrichtung zur Ableitung eines Freigabe-/Sperrsignals für einen Befüllungs- oder Entleerungsvorgang des Feststoff- oder Flüssigkeitsbehälters erfaßt wird. Für eine kostengünstige und sichere Realisierung einer derartigen Vorrichtung ist der Code-Träger als Transponder ausgebildet, der über eine induktive, in dem Füllschlauch integrierte Koppel-Vorrichtung gelesen oder beschrieben werden kann.

Alternativ kann der den Tankinhalt kennzeichnende Transponder auch durch eine rechnergesteuerte, das Verhalten des Transponders emulierende Vorrichtung ersetzt werden, was neben flexibleren Nutzungsmöglichkeiten auch einen weitergehenden, bidirektionalen Datentransfer ermöglicht.

Eine weitere Ausführungsform, die keine induktive Kopplung über den Füllschlauch voraussetzt, erfordert beidseitig ähnlich ausgebildete Rechnersysteme, die jeweils über eine Lesevorrichtung für Transponder verfügen und über eine zusätzliche Datenstrecke on-line oder off-line miteinander in Verbindung stehen. Hier genügt es, jeden Verbindungsschlauch beidseitig mit Lesetranspondern zu kennzeichnen, um die Aufgabe des zuverlässigen Vermischungsschutzes zu lösen.

Die Erfindung wird beispielsweise in der schematischen Zeichnung beschrieben. In dieser zeigen:
- Fig. 1: ein System zum Absichern eines Befüllungsvorvorganges von einem Tankfahrzeug in einen Kraftstofftank.
- Fig. 2: ein System ähnlich Fig. 1 mit mehreren Tanks für unterschiedliche Produkte;
- Fig. 3: ein System gemäß Fig. 2 mit einem stationären Rechner zur Speicherung und Zuordnung der Identifikationscodes für unterschiedliche Produktarten zu den Tanks;
- Fig. 4: ein System gemäß Fig. 3 mit Schreib-/Lese-Transpondern,
- Fig. 5: einen Befüllungsschlauch mit zwei über eine Verbindungsleitung gekoppelten induktiven Kopplungselementen, und
- Fig. 6: ein weiteres System.

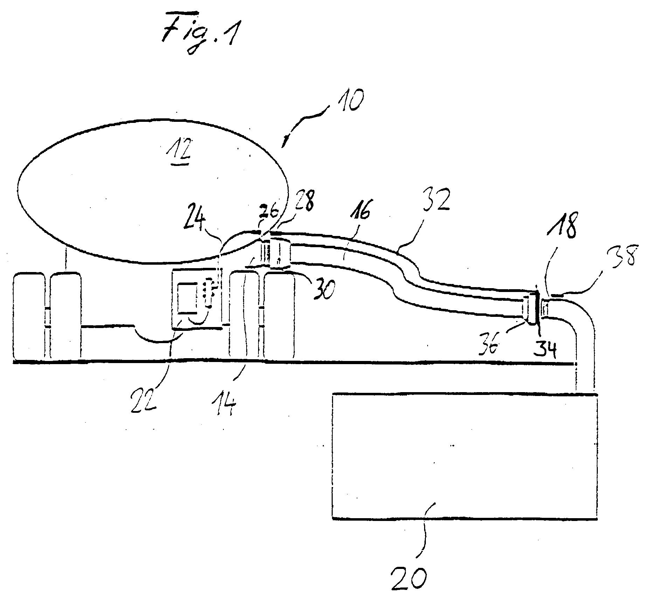

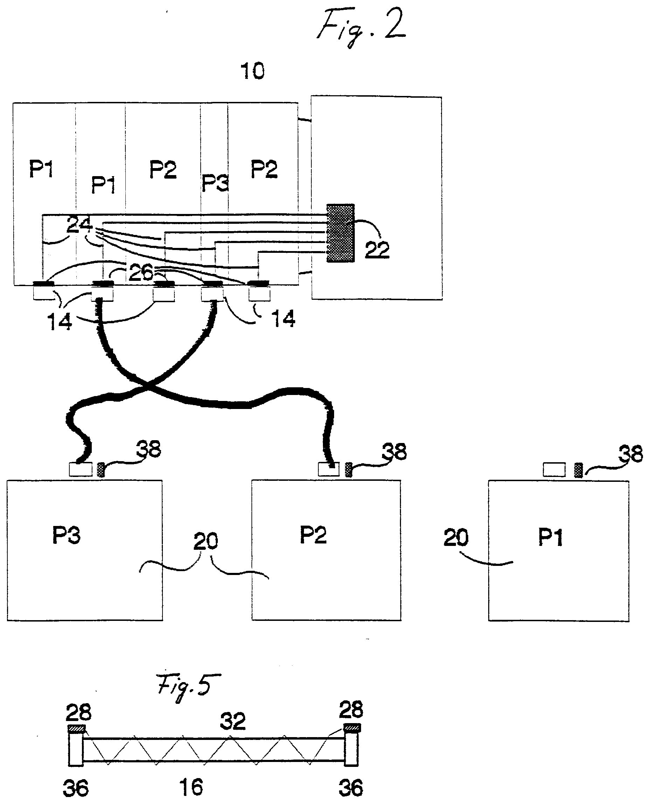

Ein Tankwagen 10 hat gemäß Fig. 1 einen Kraftstofftank 12 zur Beförderung von Verbrennungskraftstoffen. Der Kraftstofftank des Tankwagens 10 ist in mehrere in Fig. 2 dargestellte Kammern für unterschiedliche Produkte P1 bis P3 unterteilt. Jede Kammer verfügt über einen Anschlußstutzen 14 für einen Verbindungsschlauch 16 zum Anschluß an den Stutzen 18 eines Kraftstofftanks 20 eines Tanklagers oder einer Tankstelle (siehe auch Fig. 5). Der Tankwagen 10 verfügt über einen Bordrechner 22, der mit einer nicht dargestellten Antenne für eine Datenübertragung versehen ist. Der Bordrechner 22 ist in einem feuergeschützten Gehäuse angeordnet. Vorzugsweise verfügt der Bordrechner 22 über einen Speicher, z.B. einen Tape-Streamer oder RAM-Speicher zur Datensicherung. Vom Bordrechner 22 führt eine Anschlußleitung 24 zu einem induktiven Ankopplungselement 26, welches an dem Stutzen 14 des Tankfahrzeugs 10 integriert ist. Dieses induktive Kopplungselement 26 wirkt mit einem an dem Verbindungsschlauch 16 angeordneten induktiven Kopplungselement 28 zusammen, das im Anschlußstutzen 30 des Verbindungsschlauches integriert ist. Das induktive Kopplungselement 28 ist über eine Verbindungsleitung 32 mit einem induktiven Kopplungselement 34 am entgegengesetzten Anschlußflansch 36 des Verbindungsschlauches 16 verbunden. Die induktive Ankoppelung 34 ist wiederum z.B. induktiv mit einem am Tankstutzen 18 des Kraftstofftanks 20 vorgesehenen Transponder 38 verbunden, der Informationen über die Art des Kraftstoffs enthält, für den der Kraftstofftank 20 vorgesehen ist. Der Transponder 38 kann zusätzlichz noch weitere Informationen enthalten, zum Beispiel Bezugsquelle des Kraftstoffes, Zeit des letzten Befüllvorganges etc.. Der Bordrechner liest über die induktiven Ankopplungen 26,28 und 34 den Inhalt des Transponders 38 aus und vergleicht diese Daten mit Daten, die bei der Befüllung des Tankwagens 10 entweder über Funk oder über die Anschlußleitung 24 in den Bordrechner 22 des Tankwagens 10 eingegeben worden sind.

Aus der Auswertung dieses Vergleichs leitet der Bordrechner ein Freigabe-/Sperrsignal ab, das den Befüllungsvorgang startet oder erst gar nicht in Gang kommen läßt. Alternativ oder zusätzlich hierzu kann die Abgabe eines Alarmsignals vorgesehen sein.

Fig. 2 zeigt in stark schematisierter Form einen Tankwagen mit mehreren Kammern für unterschiedliche Produktgruppen P1 bis P3. Diese Produkte P1 bis P3 werden auf die in Fig. 1 geschilderte Weise den entsprechenden Tanks 20 zur Aufnahme der Produkte P 1 bis P3 zugeführt.

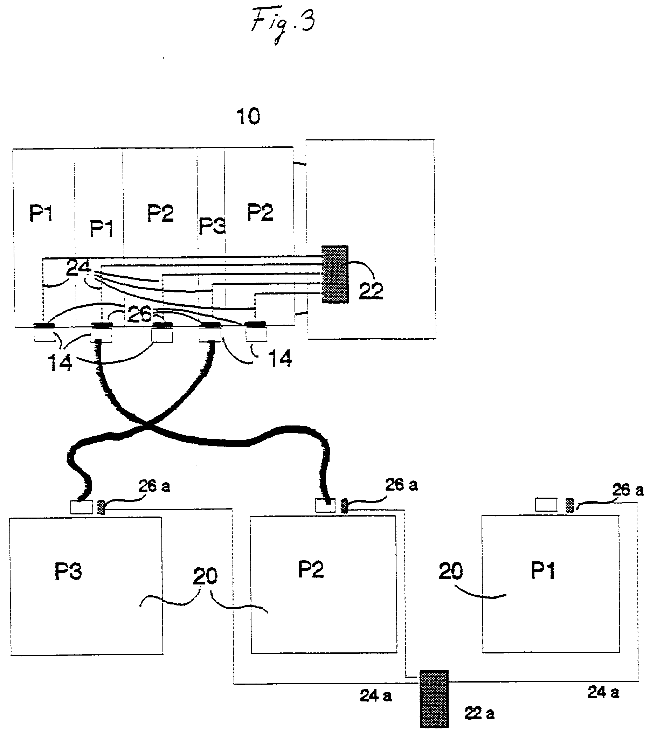

Fig. 3 zeigt ein zu Fig. 2 weitgehend identisches System. Im Unterschied zu Fig. 2 sind an den Tanks 20 keine isolierten Lesetransponder 38, sondern induktive Ankopplungselemente 26a vorgesehen, die mit einem stationären Überwachungsrechner 22a über Leitungsverbindungen 24a verbunden sind. In dem Überwachungsrechner sind die Produktdaten für jeden Tank 20 enthalten. Nachdem ein Tank vollkommen geleert und gesäubert worden ist, kann er nach entsprechender Umprogrammierung des stationären Überwachungsrechners 22a auch für andere Produkte verwendet werden. Mittels der induktiven Ankopplungselemente 26a kann jedoch sichergestellt werden, daß der Wechsel eines Tanks für eine andere Produktgruppe erst dann möglich ist, wenn ein nicht dargestellter Füllgradmesser eine vollkommene Entleerung des Tanks signalisiert.

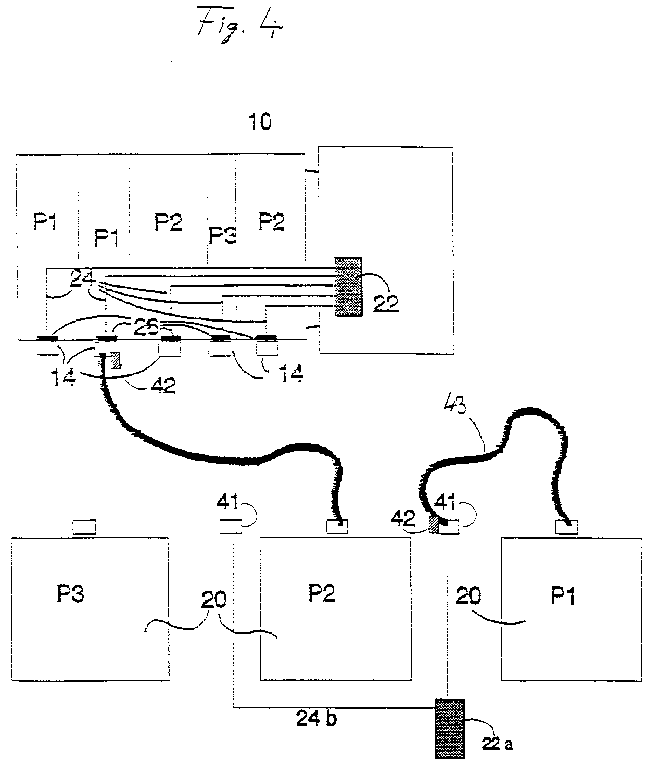

Fig. 4 zeigt ein System ähnlich Fig. 3, bei dem jeweils ein Tank 20 sukzessive und nach vollständiger Entleerung für unterschiedliche Produkte verwendet werden können. Dieses System kommt ohne aufwendige Kommunikationssysteme aus. In den losen Schlauchenden des Befüllungsschlauches 43 sind Schreib-/Lesetransponder 42 ausgebildet, die über Schreib-/Lesevorrichtungen 41 beschrieben werden. Die Schreib-/Lesevorrichtungen 41 sind über Leitungsverbindungen mit einem stationären Überwachungsrechner verbunden, der die Informationen über alle für einen Befüllungsvorgang der Tanks 20 relevanten Daten enthält. An der Schreib-/Lesevorrichtung 41 ist eine Halterung angebracht, in der der Befüllungsschlauch 43 eingehängt wird. Nach dem Beschreiben in der Schreib-/Lesevorrichtung 41 kann der Befüllungsschlauch 43 für einen Befüllungsvorgang verwendet werden. Der Schreib-/Lesetransponder überprüft dann die an den induktiven Kopplungselementen 26 eines Tankstutzens 14 anliegenden Codierungen auf ihre Richtigkeit bzw. übergibt über das Kopplungselement Befüllungsinformationen wie Befüllungsart und Befüllungsmenge an den Bordrechner 22 des Tankfahrzeugs 10. Entsprechend diesen Informationen wird dann der Befüllungsvorgang durchgeführt.

Fig. 5 enthält eine detaillierte Ansicht eines Befüllungsschlauches 16 wie er in den Systemen aus den Fig. 1 bis 3 verwendet wird.

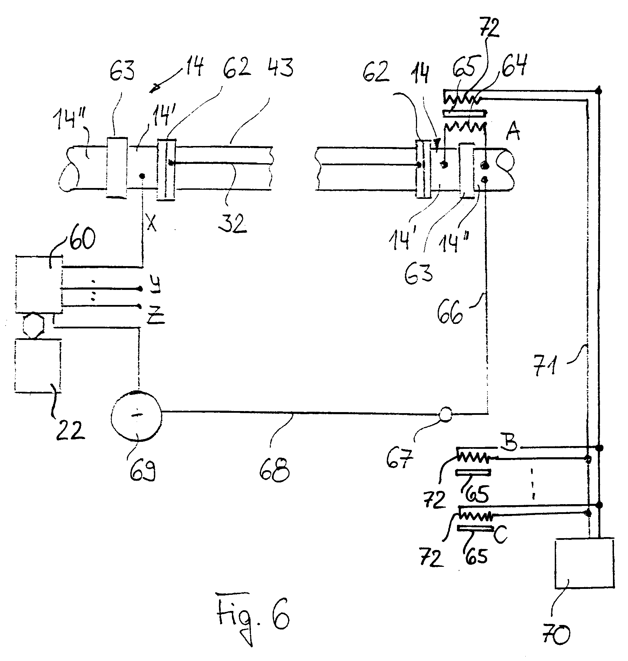

Wie in Figur 6 veranschaulicht wird, ist an der tankwagenseitigen Auswerteeinheit 22 ein Multiplexer 60 angeschlossen, welcher jeweils über eine Leitung mit einem tankwagenseitigen Anschlußstutzen 14 verbunden ist. Die auf diese Weise von der Auswerteeinheit 22 anwählbaren Leitungsverbindungen sind mit X, Y...Z bezeichnet. Jede dieser Leitungsverbindungen ist einem anderen Anschlußstutzen zugeordnet.

In dem dargestellten Beispiel ist ein Anschlußstutzen 14 mit einer Leitungsverbindung X über einen Füllungsschlauch 43 mit einem tankseitigen Anschlußstutzen 14 über Flansche 62 verbunden, welche eine elektrische Verbindung zwischen der schlauchseitigen Leitung 32, welche die Armierung des Befüllungsschlauches 43 sein kann, und elektrisch leitenden freien Enden 14' der Anschlußflansche 14 herstellt. Die tankwagenseitigen bzw. tankseitigen Abschnitte 14'' der Anschlußstutzen 14 sind jeweils durch eine Isolierung 63 elektrisch von den freien Enden getrennt. Tankseitig sind in diesem Beispiel auch die an die Isolierung 63 anschließenden Abschnitte 14 '' der Tankstutzen 14 elektrisch leitend ausgebildet. Hier wird die Isolierung 63 jeweils durch eine eingeschleifte Spule 64 überbrückt, mit welcher eine induktive Kopplung mit dem zugeordneten Transponder 65 hergestellt wird. Alle Abschnitte 14'' sind ferner ortsfest mit einer Erdungsleitung 66 elektrisch leitend verbunden, welche eine Verbindungsstelle (Erdungsklemme) 67 für ein mobiles Erdungskabel 68 aufweist. Über das Erdungskabel 68, welches beispielsweise tankwagenseitig auf einer Kabeltrommel 69 zur Verfügung stehen kann, wird eine Verbindung zum Multiplexer 60 bzw. zur Auswerteeinheit 22 hergestellt.

Auf diese Weise wird eine geschlossene Leitungsverbindung von der Auswerteeinheit 22 über den tankwagenseitigen Anschlußstutzen 14, den Befüllungsschlauch 43, den tankseitigen Anschlußstutzen 14 und die Spule 64 sowie die Erdungsleitung 66 und das Erdungskabel 68 zurück zur Auswerteeinheit 22 hergestellt.

Jeder Transponder 64 kann auf diese Weise - eine Schlauchverbindung vorausgesetzt - von der Auswerteeinheit 22 abgefragt oder im Falle eines Schreib/Lesetransponders beschrieben werden. Zusätzlich oder wahlweise ist in diesem Beispiel eine Emulation eines Transponders 64 durch ein ortsfestes Rechnersystem 70 möglich, welches durch ein Feldbussystem 71 über weitere Spulen 72 induktiv mit der Spule 64 gekoppelt ist. Auf diese Weise kann beispielsweise zunächst durch eine Abfragesequenz die im Transponder 65 vorhandene Information von der Auswerteeinheit 22 abgefragt werden und danach kann ein Datenaustausch mit dem Rechnersystem 70 erfolgen. Die den einzelnen tankseitigen Anschlußstutzen 14 bzw. Transpondern 65 zugeordneten Schnittstellen sind mit A, B...C bezeichnet. In dem dargestellten Beispiel können mit einem oder mehreren Befüllungsschläuchen 43 beliebige Verbindungen zwischen den tankwagenseitigen Leitungsschnittstellen X, Y...Z und den tankseitigen Schnittstellen A, B...C gestellt werden. Bei gleichzeitiger Verwendung mehrerer Füllungsschläuche 43 können die Transponder 65 an den jeweils zugeordneten Anschlußstutzen 14 zum Beispiel zeitsequentiell abgefragt und so eindeutig festgestellt werden, welcher tankwagenseitige Stutzen 14 mit welchem tankseitigen Stutzen über einen Schlauch verbunden ist. Für die Abfrage und Speisung der oder des Transponders 65 kann ein Gleichstrom oder ein Wechselstrom bestimmter Frequenz verwendet werden, welchem die zu übertragende Information in bekannter Weise aufgeprägt wird.

Dadurch daß die Transponder 65 durch das Rechnersystem 70 emuliert werden, kann eine bereits vorhandene, lediglich Transponder 65 aufweisende Anordnung auf einfache Weise nachträglich ergänzt und erweitert werden. Ein weiterer Vorteil ist darin zu sehen, daß über eine einmal hergestellte Verbindung mittels eines einzigen Befüllungsschlauches 43 tankseitige Sensoren und Bedienungseinheiten (nicht dargestellt) angesteuert und/oder abgefragt werden können, die am Rechnersystem 70 angeschlossen sind. Es kann sich hierbei beispielsweise um Sensoren zur Messung des Füllstandes der einzelnen Tanks oder um ein Einlaß- und Auslaßventile an den Tanks handeln. Durch die Integration der Transponder 65 in einem geschlossenen Leitungskreis wird der Vorteil erreicht, daß auch eine unvollständige Verbindung der Flansche 62 aufgrund der dabei zwangsläufig vorhandenen Leitungsunterbrechung von der Auswerteeinheit 22 erkannt wird.

Selbstverständlich läßt sich die Erfindung nicht nur zur Sicherung gegen Fehlbedienungen beim Befüllen von Kraftstofftanks, sondern bei allen Feststoff- oder Flüssigkeitstanks verwenden, bei denen eine Fehlbedienung mit nachfolgender Produktvermischung mit einem hohen wirtschaftlichen Risiko verbunden ist. Die Erfindung läßt sich auch für die Ausrüstung von Milchtankfahrzeugen verwenden.

## Patentansprüche

1. Vorrichtung zur verwechslungssicheren Überleitung von Feststoffen, Flüssigkeiten oder Gasen, insbesondere Verbrennungskraftstoffen, zwischen verschiedenen Kammern eines Tankwagens und verschiedenen ortsfesten Tanks, die jeweils mit einem elektrisch leitenden Anschlußstutzen versehen sind, über mindestens einen Befüllungsschlauch, der eine elektrisch leitende Armierung aufweist, und der über Flansche mit den betreffenden Anschlußstutzen verbunden ist, mit einer Erdungsleitung zwischen tankwagenseitigen und tankseitigen Abschnitten der Anschlußstutzen, mit einer tankwagenseitigen Auswerteeinheit und einer Lesevorrichtung zum Lesen eines Codes, der in einem Code-Träger zur Kennzeichnung der Feststoffe oder Flüssigkeiten angeordnet ist, und mit einer Vorrichtung zur Verhinderung eines Befüllungs- oder Entnahmevorgangs und/oder zur Erzeugung eines Kontrollsignals in Abhängigkeit von einem aus dem Lesevorgang abgeleiteten Freigabe-/Sperrsignals,
dadurch **gekennzeichnet**,
daß die Auswerteeinheit einerseits mit jeweils einer elektrischen Verbindungsleitung mit allen tankwagenseitigen Anschlußstutzen und andererseits mit einer Erdungsleitung mit allen tankseitigen Anschlußstutzen verbunden ist, so daß über die Armierung eines Befüllungsschlauches jeweils ein geschlossener Leitungskreis hergestellt werden kann, daß im Bereich eines tankseitigen Anschlußstutzens eine Induktionsspule in diesen Leitungskreis eingeschleift ist, daß der Code-Träger als Transponder ausgebildet und jeweils an einem tankseitigen Anschlußstutzen angeordnet ist, und daß jeder Transponder mit der eingeschleiften Spule induktiv gekoppelt ist.

2. Vorrichtung nach Anspruch 1,
dadurch **gekennzeichnet**,
daß tankseitig ein Rechnersystem vorhanden ist, welches über ein Feldbussystem mit allen Transpondern verbunden ist, bevorzugt über eine Kopplungseinheit, beispielsweise jeweils weitere Spulen, die in der Nachbarschaft der eingeschleiften Spulen und der betreffenden Transponder angeordnet sind.

3. Vorrichtung nach Anspruch 2,
dadurch **gekennzeichnet**,
daß eine induktive Kopplung als Schnittstelle vom Feldbussystem zum Leitungskreis vorhanden ist.

4. Vorrichtung nach Anspruch 2 oder 3,
dadurch **gekennzeichnet**,
daß Sensoren zur Überwachung der Füllstände der Tanks und/oder Einlaß-/Auslaßventilen des Tanks vorhanden sind, und daß diese mit dem Rechnersystem zur Auswertung und/oder Ansteuerung verbunden sind.

5. Vorrichtung nach einem der Ansprüche 2 bis 4,
dadurch **gekennzeichnet**,
daß ein Datenaustausch zwischen der Auswerteeinheit und einem oder mehreren Transpondern gleichzeitig oder zeitsequentiell mit einem Datenaustausch zwischen der Auswerteeinheit und dem Rechnersystem stattfindet.

6. Vorrichtung nach einem der vorhergehenden Ansprüche,
dadurch **gekennzeichnet**,
daß zwischen der Auswerteeinheit und den tankwagenseitigen Anschlußstutzen eine Demultiplexer-Einheit vorhanden ist, welche über ein weiteres Bussystem die Verbindung zu den tankwagenseitigen Tankstutzen herstellt.

7. Vorrichtung nach einem der vorhergehenden Ansprüche,
dadurch **gekennzeichnet**,
daß die freien Enden der Anschlußstutzen elektrisch leitend ausgebildet und in die Leitungskreise integriert sind, daß sie im übrigen von den tankseitigen bzw. tankwagenseitigen Abschnitten durch eine Isolierung elektrisch getrennt sind, daß die Isolierungen tankseitig jeweils durch die Spule überbrückt sind, und daß die tankseitigen, an die Isolierung anschließenden Abschnitte der Anschlußstutzen eine elektrische Verbindung zur Erdungsleitung aufweisen.

8. Vorrichtung nach einem der Ansprüche 2 bis 7,
dadurch **gekennzeichnet**,
daß das für das Lesen und Schreiben der Transponder verwendete Protokoll von einer tankseitigen Rechnerschnittstelle emuliert oder aufwärtskompatibel erweitert wird und dadurch ein bidirektionaler Datenaustausch zwischen tankseitigem Rechnersystem und Auswerteeinheit ermöglicht wird.
